(19) **Europäisches Patentamt**

**European Patent Office**

**Office européen des brevets**

(11) **EP 0 844 943 B1**

(12) **EUROPÄISCHE PATENTSCHRIFT**

(45) Veröffentlichungstag und Bekanntmachung des Hinweises auf die Patenterteilung:
**10.10.2001 Patentblatt 2001/41**

(51) Int Cl.$^7$: **B60R 16/02**, B60R 21/00, H01F 38/14

(21) Anmeldenummer: **96914064.9**

(22) Anmeldetag: **10.05.1996**

(86) Internationale Anmeldenummer:
**PCT/DE96/00813**

(87) Internationale Veröffentlichungsnummer:
**WO 97/06976 (27.02.1997 Gazette 1997/10)**

(54) **ANORDNUNG ZUM KONTAKTLOSEN ÜBERTRAGEN EINES AIRBAG-AUSLÖSESIGNALS**

ARRANGEMENT FOR THE CONTACTLESS TRANSMISSION OF AN AIR-BAG RELEASE SIGNAL

DISPOSITIF POUR LA TRANSMISSION SANS CONTACT D'UN SIGNAL DE DECLENCHEMENT DE COUSSIN DE SECURITE GONFLABLE

(84) Benannte Vertragsstaaten:
**DE FR GB IT SE**

(30) Priorität: **19.08.1995 DE 19530589**

(43) Veröffentlichungstag der Anmeldung:
**03.06.1998 Patentblatt 1998/23**

(73) Patentinhaber: **ROBERT BOSCH GMBH**
**70442 Stuttgart (DE)**

(72) Erfinder:
• ZABLER, Erich
D-76297 Stutensee (DE)
• DUKART, Anton
D-76744 Wörth (DE)

(56) Entgegenhaltungen:
DE-A- 2 433 555          DE-A- 4 404 816
DE-C- 3 812 631

EP 0 844 943 B1

## Beschreibung

Stand der Technik

Die vorliegende Erfindung betrifft eine Anordnung zum kontaktlosen Übertragen eines Auslösesignals von einer an einem Fahrzeug-Chassis angeordneten Steuerschaltung zu einem in einem Lenkrad installierten Airbag, welche Anordnung ein Übertrager ist, dessen Primär- und Sekundärwicklung in getrennten, um die Drehachse des Lenkrades gegeneinander verdrehbaren Schalenkernen liegen. Eine derartige Anordnung ist aus der DE-OS 24 33 555 bekannt.

Ein ganz wesentliches Kriterium für die Funktionssicherheit eines Airbag ist es, daß Schaltvorgänge oder Kurzschlüsse im Primärstromkreis des Übertragers nicht zu einer Fehlauslösung des Airbags führen. Ein Übertrager hat die Eigenschaft, daß er bei sprungartigen Ein- und Abschaltvorgängen eine relativ hohe magnetische Energie aufnimmt, die sich hauptsächlich in der sekundärseitig angeschlossenen Last entlädt. Diese Last ist im Falle eines Airbag der Zündpillenwiderstand. Überschreitet nun die in den Zündpillenwiderstand eingespeiste Energie eine bestimmte Schwelle, so führt das zu einem Auslösen des Airbag.

Der Erfindung liegt daher die Aufgabe zugrunde, eine Anordnung der eingangs genannten Art anzugeben, welche es vermeidet, daß der Airbag ungewollt ausgelöst wird, wenn im Primärstromkreis des Übertragers plötzliche An- oder Abschaltvorgänge bzw.zwischen der Zündpille und den Spannungsversorgungsleitungen der Fahrzeugbatterie Kurzschlüsse auftreten.

Vorteile der Erfindung

Erfindungsgemäß wird die Aufgabe durch die Merkmale des Anspruchs 1 gelöst. Zweckmäßige Weiterbildungen der Erfindung gehen aus den Unteransprüchen hervor.

Dadurch, daß nach der Erfindung einer der beiden Schalenkerne des Übertragers nicht als Voll-Ring ausgebildet ist, sondern aus ein oder mehreren Ringsegmenten besteht, verringert sich seine Induktivität so stark, daß die z.B. bei einem Kurzschluß gegen Spannungsversorgungsleitungen im Primärstromkreis aufgenommene magnetische Energie nicht ausreicht, um den Airbag auszulösen. Die vom Übertrager aufgenommene magnetische Energie läßt sich noch dadurch weiter verringern, daß der Strom im Primärkreis durch eine höherohmige Auslegung der Primärwicklung begrenzt wird.
Die Segmentierung des Schalenkerns bringt zudem eine Gewichtseinsparung,die sich besonders vorteilhaft auf der Seite des Lenkrades auswirkt.

Beschreibung eines Ausführungsbeispiels

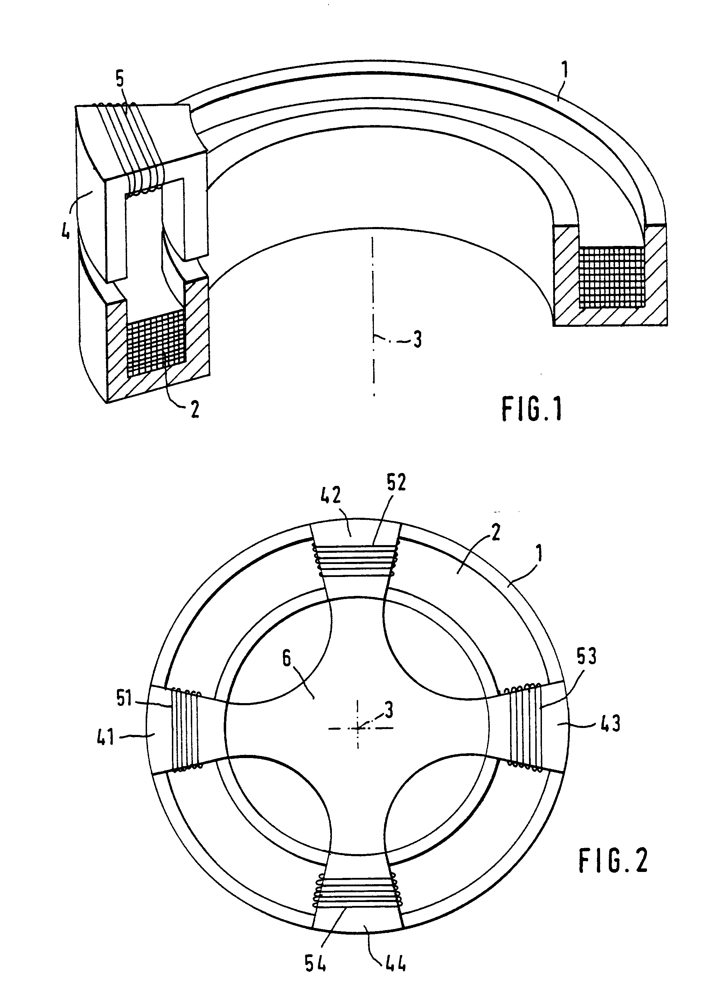

Die Erfindung wird anhand eines in der Zeichnung dargestellten Ausführungsbeispiels beschrieben. Figur 1 zeigt einen Ausschnitt aus einem Drehübertrager, bei dem ein Schalenkern aus einem Ringsegment besteht und Figur 2 zeigt einen Drehübertrager, bei dem ein Schalenkern aus vier Ringsegmenten besteht.

Für die kontaktlose Übertragung eines Auslösesignals für einen in einem Lenkrad eines Fahrzeugs angeordneten Airbag ist ein Übertrager vorgesehen, der aus zwei, eine Primär- und eine Sekundärwicklung aufnehmenden, Schalenkernen besteht, welche um eine gemeinsame Achse gegeneinander verdrehbar angeordnet sind. Dabei ist der primärseitige Schalenkern mit dem Chassis verbunden, an dem auch die das Auslösesignal erzeugende Steuerschaltung angeordnet ist. Der sekundärseitige Schalenkern des Übertragers ist mit dem Lenkrad, in dem der Airbag installiert ist, verbunden. Die gemeinsame Drehachse beider Schalenkerne ist die Lenkradachse.

Die magnetische Energie, welche ein Übertrager bei primärseitigem Stromfluß aufnimmt, läßt sich beschreiben durch:

$$E = \frac{1}{2} \cdot L_1 \cdot I_1^2,$$

wobei $L_1$ die primärseitige Induktivität des Übertragers und $I_1$ der im Primärkreis fließende Strom ist. Wie eingangs geschildert, soll der Übertrager so ausgelegt werden, daß die von ihm aufgenommene magnetische Energie bei einem unerwünschten Schaltvorgang oder einem Kurzschluß auf der Primärseite nicht so groß werden kann, daß sie in der Lage ist, den Airbag auszulösen.

Eine Verringerung der magnetischen Energie des Übertragers wird dadurch erreicht, daß die Induktivität $L_1$ soweit reduziert wird, daß der genannte Effekt nicht eintreten kann.

Die Figur 1 zeigt einen Ausschnitt aus einem Übertrager, mit einem ersten ringförmigen Schalenkern 1, der beispielsweise die Primärwicklung 2 trägt. Dieser primärseitige Schalenkern 1 ist mit einem nicht dargestellten Fahrzeug-Chassis verbunden. Ein gegenüber diesem primärseitigen Schalenkern 1 um die Lenkradachse 3 drehbar gelagerten sekundärseitigen Schalenkern 4 besteht nicht aus einem geschlossenen Ring sondern nur aus einem Ringsegment. Der Ersatz eines geschlossenen Schalenkernrings durch ein Ringsegment bringt die geforderte Reduzierung der Induktivität $L_1$ des Übertragers. Soll die magnetische Energie des Übertragers noch weiter reduziert werden, so bietet es sich an, den Strom im Primärkreis auf einen geringeren Wert zu begrenzen. Dies läßt sich dadurch erreichen, daß die Primärwicklung höherohmig ausgeführt wird als die Sekundärwicklung. Zu diesem Zweck wird z.B. für die Primärwicklung ein dünnerer Kupferdraht verwendet oder ein höherohmiges Drahtmaterial, beispielsweise Konstantan.

Wie der Figur 1 zu entnehmen ist, besitzen beide Schalenkerne 1 und 4 U-Profilform. Während die an das Steuergerät angeschlossene Primärwicklung 2 im U-Profilring liegt, ist die an eine Zündpille des Airbag angeschlossene Sekundärwicklung 5 um einen Schenkel des ringsegmentförmigen U-Profils 4 herumgewickelt.

Die Stirnseiten der U-Profile 1 und 4 sind einander zugewandt und bilden zwei Luftspalte. Anders als in der Figur 1 dargestellt, ist es zweckmäßig, die beiden U-Profile 1 und 4 koaxial ineinander so anzuordnen, daß die Luftspalte zwischen beiden vom magnetischen Fluß radial zur Drehachse 3 geschnitten werden. Wenn man nun die Stirnseiten eines U-Profils gegenüber den Stirnseiten des anderen U-Profils verbreitert, wird die Kopplung zwischen den Wicklungen 2 und 5 unempfindlich gegenüber einem axialen Versatz zwischen den beiden Schalenkernen 1 und 4. Somit wirken sich Montagetoleranzen des Lenkrades nicht störend auf vom Steuergerät zum Airbag übertragene Signale aus.

Die Figur 2 zeigt ein Ausführungsbeispiel eines Übertragers, bei dem der sekundärseitige Schalenkern aus vier Ringsegmenten 41, 42, 43 und 44 besteht. Diese vier Ringsegmente sind über einen speichenartigen Träger 6 mechanisch miteinander verbunden. Der Träger 6 besteht vorzugsweise aus einem nicht magnetisierbaren Kunststoffmaterial.

Jeder der Ringsegmente 41 bis 44 ist mit einer Wicklung 51, 52, 53 und 54 versehen. Alle Wicklungen können in Reihe geschaltet sein und somit eine gemeinsame Sekundärwicklung bilden. Alternativ dazu können beliebige andere Kombinationen einzelner Wicklungen zusammengeschaltet werden, so daß letztendlich mehrere Sekundärwicklungen entstehen, mit denen verschiedene Funktionen im Lenkrad ansteuerbar sind (z. B. Airbag, Hupe, Radio, Lenkradheizung usw.).

Zu einer Fehlauslösung des Airbag kann es auch kommen, wenn es an den sekundärseitigen Anschlüssen des Übertragers zu einem Kurzschluß kommt. Die Gefahr eines solchen Kurzschlusses läßt sich weitgehend dadurch vermeiden, daß die Sekundärseite des Übertragers und die Zündpille des Airbags konstruktiv möglichst eng beieinander liegen, so daß eine schädliche Berührung der Leitungen zwischen Übertrager und Zündpille ausgeschlossen werden kann.

Es sollte ebenso ausgeschlossen werden, daß der Airbag bei abmontiertem Lenkrad ausgelöst wird. Als Maßnahme dagegen bietet sich ein vor der Zündpille angeordneter Kurzschlußschalter an, der beim Abmontieren des Lenkrades die Anschlüsse der Zündpille miteinander kurzschließt, so daß von außen her kein Strom durch die Zündpille fließen kann. Die automatische Betätigung des Kurzschlußschalters kann mittels eines an der Lenksäule befindlichen Stiftes erfolgen, der in eine Öffnung am Lenkrad eingreift und den Kurzschlußschalter öffnet, wenn das Lenkrad auf der Lenksäule montiert ist. Sobald das Lenkrad entfernt wird, gibt der Stift den Schalter frei und schließt ihn. Sollte der Schalter beim Wiederanmontieren des Lenkrades nicht öffnen, so wird diese Fehlfunktion automatisch von einer Zündpillen-Überwachung (als Kurzschluß) erkannt.

## Patentansprüche

1.  Anordnung zum kontaktlosen Übertragen eines Auslösesignals von einer an einem Fahrzeug-Chassis angeordneten Steuerschaltung zu einem in einem Lenkrad installierten Airbag, welche Anordnung ein Übertrager ist, dessen Primär- (2) und Sekundärwicklung (5) in getrennten, um die Drehachse (3) des Lenkrades gegeneinander verdrehbaren Schalenkernen (1, 4) liegen, **dadurch gekennzeichnet, daß** einer der beiden Schalenkerne (1, 4) die Form eines geschlossenen Rings hat und daß der andere Schalenkern (4) aus ein oder mehreren Ringsegmenten (4, 41, 42, 43, 44) besteht.

2.  Anordnung nach Anspruch 1, **dadurch gekennzeichnet, daß** die Ringsegmente (41, 42, 43, 44) des Schalenkerns einen gemeinsamen Träger (6) haben, der aus einem nicht magnetisierbaren Material besteht, und daß jedes Ringsegment (41, 42, 43, 44) eine Wicklung (51, 52, 53, 54) trägt, wobei mindestens zwei dieser Wicklungen in Reihe geschaltet sind.

3.  Anordnung nach Anspruch 1, **dadurch gekennzeichnet, daß** die Schalenkerne koaxial ineinander gelagert sind, so daß zwischen beiden ein Luftspalt besteht, den der magnetische Fluß radial zur Drehachse schneidet.

4.  Anordnung nach Anspruch 1, **dadurch gekennzeichnet, daß** der Widerstand der Primärwicklung (2) größer ist als der der Sekundärwicklung (5, 51, 52, 53, 54).

## Claims

1.  Arrangement for the contactless transmission of a triggering signal from a control circuit arranged on a vehicle chassis to an airbag installed in a steering wheel, which arrangement is a transmitter whose primary winding (2) and secondary winding (5) are situated in separate pot-type cores (1, 4) which can be rotated relative to one another about the axis of rotation (3) of the steering wheel, **characterized in that** one of the two pot-type cores (1, 4) has the shape of a closed ring, and **in that** the other pot-type core (4) comprises one or more annular segments (4, 41, 42, 43, 44).

2.  Arrangement according to Claim 1, **characterized in that** the annular segments (41, 42, 43, 44) of the pot-type core have a common support (6) which consists of a non-magnetizable material, and **in that** each annular segment (41, 42, 43, 44) bears a winding (51, 52, 53, 54), at least two of these windings being connected in series.

3.  Arrangement according to Claim 1, **characterized in that** the pot-type cores are mounted coaxially one inside the other, such that there exists between the two an air gap which is cut by the magnetic flux radially relative to the axis of rotation.

4.  Arrangement according to Claim 1, **characterized in that** the resistance of the primary winding (2) is higher than that of the secondary winding (5, 51, 52, 53, 54).


**Revendications**

1.  Dispositif pour la transmission sans contact d'un signal produit par un circuit de commande monté sur le châssis d'un véhicule, pour déclencher un coussin de sécurité monté dans le volant du véhicule, ce dispositif étant un transmetteur dont les enroulements primaire (2) et secondaire (5) sont montés respectivement dans des noyaux à coquille (1, 4) distincts pouvant tourner l'un par rapport à l'autre autour de l'axe de rotation (3) du volant, **caractérisé en ce qu'**
    un des deux noyaux à coquille (1, 4) a la forme d'une bague fermée tandis que l'autre noyau à coquille (4) est composé d'un ou plusieurs segments annulaires (4, 41, 42, 43, 44).

2.  Dispositif selon la revendication 1, **caractérisé en ce que**
    les segments annulaires (41, 42, 43, 44) du noyau à coquille ont un support commun (6) fait d'un matériau non magnétisable et chacun des segments annulaires (41, 42, 43, 44) porte un enroulement (51, 52, 53, 54), deux au moins de ces enroulements étant montés en série.

3.  Dispositif selon la revendication 1, **caractérisé en ce que**
    les noyaux à coquille sont montés coaxialement l'un dans l'autre, en laissant entre eux une lame d'air que coupe le flux magnétique radialement par rapport à l'axe de rotation.

4.  Dispositif selon la revendication 1, **caractérisé en ce que**
    la résistance de l'enroulement primaire (2) est supérieure à celle de l'enroulement secondaire (5, 51, 52, 53, 54).

FIG.1

FIG.2